(19) Europäisches Patentamt
European Patent Office
Office européen des brevets

(11) Numéro de publication: **0 213 989**
**A1**

(12) # DEMANDE DE BREVET EUROPEEN

(21) Numéro de dépôt: 86401569.8

(22) Date de dépôt: 15.07.86

(51) Int. Cl.⁴: H 01 G 4/12
H 01 G 4/30

(30) Priorité: 16.07.85 FR 8510872

(43) Date de publication de la demande: 11.03.87 Bulletin 87/11

(84) Etats contractants désignés: AT BE CH DE GB IT LI NL SE

(71) Demandeur: EUROFARAD-EFD
93 rue Oberkampf
F-75540 Paris Cédex11(FR)

(72) Inventeur: Dubuisson, Jacques
22, avenue Emile Zola
F-75015 Paris(FR)

(72) Inventeur: Laville, Henri
19, rue Jeanne d'Arc
F-77400 Lagny sur Marne(FR)

(74) Mandataire: Schrimpf, Robert et al,
Cabinet Regimbeau 26, Avenue Kléber
F-75116 Paris(FR)

(54) **Procédé de fabrication d'un composant capacitif multicouche à diélectrique céramique du type cordierite, et composant ainsi obtenu.**

(57) Procédé de fabrication d'un composant capacitif céramique multicouche comportant les étapes suivantes:

a) prépartion d'une barbotine céramique de type cordiérite frittable à basse température;

b) coulage de feuilles de céramique crue;

c) séchage de feuilles;

d) sérigraphie des motifs internes au moyen d'une encre de métallisation formée d'un pigment métallique (Cu, alliage, Cu-Ni, Cu-Al .....)

e) séchage de l'encre

f) empilement des différentes feuilles pourvues de leurs motifs sérigraphiés respectifs;

g) compression de l'empilement en un bloc homogène;

h) élimination des matières organiques résiduelles;

i) frittage de la céramique, ce frittage étant réalisé à une température maximale inférieure à 1000°C; dans une atmosphère réductrice ou neutre;

j) finition des terminaisons par dépôt d'un métal.

EP 0 213 989 A1

Croydon Printing Company Ltd

PROCEDE DE FABRICATION D'UN COMPOSANT CAPACITIF MULTICOUCHE A DIELECTRIQUE CERAMIQUE DU TYPE CORDIERITE, ET COMPOSANT AINSI OBTENU.

La présente invention concerne un procédé de fabrication d'un composant capacitif céramique multicouche, ainsi que le composant obtenu par la mise en oeuvre de ce procédé.

De façon classique, un composant de ce type comporte, dans un bloc céramique diélectrique fritté, des motifs internes conducteurs pré-établis ayant des surfaces en regard pour former des électrodes de condensateurs, les éléctrodes étant réunies et reliées à des terminaisons de prise de connexion formées sur des faces du composant.

Il est souhaitable, tout particulièrement dans les applications d'hyperfréquences,de disposer d'un composant dont la constante relative du matériau diélectrique (la céramique) est la plus faible possible ; en effet, en hyperfréquence, la propagation est proportionnelle à $1/\sqrt{K}$, K étant la constante diélectrique relative.

Les différentes céramiques jusqu'à présent utilisées et présentant ces propriétés avaient cependant l'inconvénient de toujours nécessiter un frittage à haute température (par haute température, on entendra ici et dans la suite une température supérieure à 1300°C, généralement de l'ordre de 1450°C).

Le frittage a haute température impose nécessairement, pour les motifs conducteurs internes, le choix d'un métal réfractaire, c'est-à-dire non fusible à haute température,par exemple le tungstène, le palladium ou le platine, qui sont des métaux dont le point de fusion est supérieur à 1400°C et qui sont compatibles avec l'atmosphère oxydante nécessaire au frittage de la céramique.

L'un des buts de l'invention est de proposer un procédé de fabrication qui permette de s'affranchir de ces inconvénients, grâce à un diélectrique qui présente

les mêmes propriétés que les diélectriques connus, mais qui puisse fritter à basse température (par"basse température", on entendra ici et dans la suite une température inférieure à 1000°C, généralement inférieure à 980 °C), permettant l'emploi de métaux non réfractaires, par exemple l'argent (fusible à 961°C), les alliages argent-palladium, ou éventuellement l'or.

Un autre but de l'invention est de permettre un frittage aussi bien en atmosphère réductrice qu'en atmosphère oxydante, ce qui élargit encore le choix des métaux. Dans le cas d'un frittage en atmosphère réductrice, il est en outre possible d'utiliser les métaux tels que le cuivre (fusible à 1083°C), les alliages cuivre-nickel,... ou même un oxyde de cuivre qui sera réduit en cuivre du fait de la nature réductrice de l'atmosphère de frittage.

En d'autres termes, grâce à la frittabilité à basse température et en atmosphère indifféremment réductrice ou oxydante, le procédé de l'invention assure une très large compatibilité entre la céramique diélectrique, le métal des motifs conducteurs internes, et l'atmosphère de frittage, avec un très large choix des matériaux employés.

A cet effet, le procédé de l'invention est caractérisé par les étapes suivantes :

a) préparation d'une barbotine par mélange d'une poudre céramique de type cordiérite frittable à basse température avec un liant organique, en présence d'un solvant;

b) coulage de feuilles de céramique crue à partir de cette barbotine ;

c) séchage des feuilles pour évaporation du solvant;

d) sérigraphie des motifs internes au moyen d'une première encre de métallisation formée d'un pigment métallique, d'un véhicule organique et d'un solvant ;

e) séchage de l'encre ;

f) empilement des différentes feuilles pourvues de

leurs motifs sérigraphiés respectifs ;
g) compression de l'empilement en un bloc homogène ;
h) élimination des matières organiques résiduelles ;
i) frittage de la céramique, ce frittage étant réalisé à une température maximale inférieure à 1000°C ;
j) finition des terminaisons par dépôt d'un métal.

On entendra par une composition "de type cordiérite" une composition comprise dans le domaine 60 à 50% $SiO_2$, 5 à 20% MgO et 20 à 40% $Al_2O_3$ du diagramme ternaire $SiO_2$-MgO-$Al_2O_3$ (ici et dans la suite, sauf indication contraire, toutes les proportions indiquées seront des proportions pondérales).

Les propriétés avantageuses de la cordiérite étaient déjà connues pour les applications hyperfréquences: notamment faible constante diélectrique relative et faible coefficient de dilatation (de l'ordre de 1 à $3{,}10^{-6}$, valeur comparable à celle du silicium, elle-même de $3{,}10^{-6}$ environ) tout en présentant d'excellentes propriétés mécaniques.

On ne savait cependant jusqu'à présent fritter des poudres céramiques de type cordiérite qu'à haute température, imposant par le fait même un choix très restreint des métaux constituant les motifs internes.

L'invention permet au contraire un très large choix des métallisations, tant pour les motifs conducteurs internes que pour les terminaisons de prise de connexion.

D'autres caractéristiques et avantages du procédé de l'invention apparaîtront à la lecture de la description détaillée ci-dessous de plusieurs modes de mise en oeuvre.

## I. PREPARATION DES FEUILLES DE CERAMIQUE CRUE.

1°) préparation de la poudre céramique frittable à basse température

Un procédé permettant la préparation d'une telle poudre comprend par exemple les étapes consistant successivement :

. à préparer une solution alcoolique mixte d'un sel d'aluminium et de silicium, lesdits sels devant être solubles dans l'alcool ou dans un solvant miscible avec l'alcool,

. à préparer une solution d'un sel de magnésium soluble dans l'alcool ou dans un solvant miscible avec l'alcool ou encore dans son acide correspondant,

. à préparer une solution en mélangeant les deux solutions précédentes sous agitation vigoureuse pour obtenir une solution homogène,

. à ajouter à la solution précédente un agent hydrolysant sous forme de base faible totalement volatile, ce qui conduit à la formation d'un gel,

. à traiter thermiquement le gel obtenu à une température au plus égale à 450°C pendant une durée au plus égale à 24h,

. à traiter thermiquement la poudre obtenue à une température comprise entre 450°C et 900°C pendant une durée au plus égale à 6h.

De préférence, l'étape de traitement thermique de la poudre est précédée d'une étape de traitement par de l'eau oxygénée à une température comprise entre 60°C et 100°C, puis de filtrage de la suspension obtenue.

L'aluminium est introduit :

- soit sous forme d'un alcoxyde soluble dans l'alcool de formule

$$Al\left[O(CH_2)_n\ CH_3\right]_3$$

dans laquelle n représente un nombre entier compris entre O et 4.

On utilise avantageusement le butoxyde d'aluminium de formule

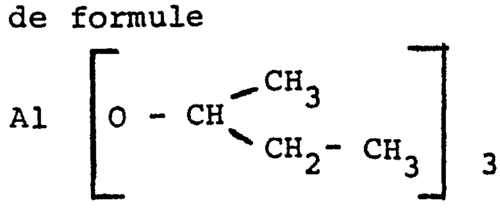

Mais d'autres alcoxydes conduisent également à de bons résultats, tels que l'éthoxyde, le propoxyde et l'isopropoxyde d'aluminium :

- soit sous forme de sels organiques ou complexes organiques, tels que l'acétate d'aluminium, le benzoate d'aluminium, l'acétylacétonate d'aluminium, le stéarate d'aluminium.

D'une façon générale, tous les sels ou complexes organiques solubles dans l'alcool ou solubles dans un solvant miscible avec l'alcool conviennent à la réalisation de l'invention :

- soit encore sous forme de sels minéraux, tels que le nitrate d'aluminium $Al\ (NO_3)_3$ hydraté ou non en solution alcoolique ou acétique, le chlorure d'aluminium $Al\ Cl_3$ en solution alcoolique ; en portant cette dernière solution à l'ébullition pendant un temps suffisant, on élimine l'acide chlorhydrique et on génère l'alcoxyde d'aluminium correspondant.

D'une façon générale, tous les sels d'aluminium solubles dans l'alcool ou dans un solvant miscible avec l'alcool conviennent à la réalisation de l'invention.

Le silicium est introduit :

- soit sous forme d'un alcoxyde soluble dans l'alcool de formule

$$Si \left[ O\ (CH_2)_n\ CH_3 \right]_4$$

dans laquelle n représente un nombre entier compris entre O et 4.

On utilise avantageusement l'éthoxyde de silicium de formule

$$Si \left[ OC_2H_5 \right]_4$$

Mais d'autres alcoxydes de silicium conduisent également à de bons résultats, tels que le propoxyde, l'isopropoxyde et le butoxyde de silicium :

- soit sous forme d'esters ou de sels, tels que le tétracétate de silicium $(CH_3-COO)_4$ Si soluble dans l'acide acétique, ou encore un silicate d'ammonium quaternaire

D'une façon générale, tous les esters ou sels solubles dans l'alcool ou solubles dans un solvant miscible avec l'alcool, ou encore dans leur acide correspondant conviennent à la réalisation de l'invention.

Le magnésium est introduit :

- soit sous forme d'un ester ou d'un sel.

On utilise avantageusement l'acétate de magnésium $Mg(CH_3\ COO)_2$ hydraté ou non dans de l'acide acétique anhydre.

D'autres esters peuvent être utilisés de la même façon, tels que benzoate, propionate, oléate, stéarate de magnésium.

D'une façon générale, tout ester ou sel de magnésium soluble dans l'alcool ou dans un solvant miscible avec l'alcool, ou encore dans son acide correspondant convient à la réalisation de l'invention :

- soit sous forme de sels minéraux, tels que nitrate ou chlorure de magnésium hydraté ou non en solution alcoolique.

La solution mixte de sels d'aluminium et de silicium est préparée en présence d'un alcool qui peut être par exemple l'isopropanol.

L'hydrolyse qui conduit à la formation du gel s'effectue à une température généralement comprise entre 20°C et 80°C, de préférence entre 20°C et 50°C par une base faible, telle que l'hydrazine hydratée $NH_2-NH_2, H_2O$. D'une façon générale, toute base faible ne contenant que des ions volatils, telle que l'ammoniaque dilué, l'hydroxylamine, les sels d'ammonium d'acide faible (carbonate d'ammonium, carbamate d'ammonium) convient à la réalisation de cette phase du procédé.

On utilise cependant de façon préférentielle l'hydrazine hydratée, car celle-ci joue le rôle d'"égalisateur" de cinétique d'hydrolyse. Ce rôle exercé par l'hydrazine hydratée sur les cinétiques d'hydrolyse est d'un intérêt tout particulier lorsque l'on utilise comme produits de départ des alcoxydes d'aluminium et de silicium et l'acétate de magnésium, qui ont des cinétiques d'hydrolyse différentes : l'alcoxyde d'aluminium s'hydrolyse facilement, l'alcoxyde de silicium plus difficilement, l'acétate de magnésium se dissout dans l'eau. L'hydrazine hydratée permet de réaliser une hydrolyse partielle ou totale des alcoxydes accordant ainsi les vitesses de gélification et liant l'ion $Mg^{2+}$ au gel formé.

Il convient, à ce propos, de noter qu'il est souhaitable que la solution soit totalement exempte d'eau, car la moindre trace d'eau provoquerait une hydrolyse incontrôlée de l'alcoxyde le plus fragile, c'est-à-dire de l'alcoxyde d'aluminium. On note toutefois que si l'alcoxyde d'aluminium est remplacé par du nitrate d'aluminium, la présence de petites quantités d'eau n'est pas gênante.

Le traitement thermique auquel est soumis le gel après hydrolyse s'effectue à une température au plus égale à 450°C, généralement comprise entre 200°C et 450°C, pendant une durée au plus égale à 24 h, généralement comprise

entre 1 et 2 heures, la vitesse de montée en température étant par exemple comprise entre 50°C et 100°C/h. Le but de ce traitement thermique est d'éliminer la plus grande partie des solvants, de l'eau et de l'hydrazine. A l'issue de ce traitement, la poudre obtenue est de couleur légèrement jaunâtre.

La poudre est éventuellement lavée à l'eau oxygénée de préférence concentrée (20-30 %) à une température comprise entre 60°C et 100°C. Ce traitement à l'eau oxygénée a pour but d'éliminer les derniers radicaux organiques pouvant être liés aux métaux Al, Si ou Mg.

Le traitement à l'eau oxygénée peut être éventuellement remplacé par un barbottage d'air à une température comprise entre 80°C et 100°C.

On notera que cette étape de traitement à l'eau oxygénée peut être supprimée, si l'application à laquelle la poudre est destinée, n'est pas perturbée par la présence de traces de carbone, résultant de la pyrolyse de matières organiques non totalement éliminées par calcination lors du traitement thermique.

La poudre, après lavage à l'eau oxygénée, est soumise à un nouveau traitement thermique qui s'effectue à une température comprise entre 450°C et 900°C, généralement entre 550°C et 700°C pendant une durée au plus égale à 6 h, généralement comprise entre 30 et 120mn., afin d'éliminer l'eau de constitution et d'hydratation.

La poudre obtenue est une poudre relativement grossière qui,après un broyage léger, donne une poudre constituée de grains dont les dimensions sont comprises entre 0,01μ et 10 μ, et est de couleur blanche.

2°) Préparation de la barbotine.

Une fois obtenue la poudre, on prépare une barbotine en mélangeant environ 1 partie de poudre et 1,5 partie d'un liant organique (parties en poids).

Le liant organique est de composition classique ; par exemple :

- alcool polyvinylique (environ 5%),
- plastifiant (environ 15 %) tel que polyéthylèneglycol, éthylèneglycol, "cellosolve" (éther monoéthylique de l'éthylèneglycol),
- additifs appropriés : agent mouillant, défloculant, dispersant, antistatique, ...,
- solvant par exemple l'eau.

En variante, on peut également utiliser la composition suivante :

- polyvinylbutyral,
- plastifiant tel que dibutylphtalate ou analogue,
- additifs,
- solvant organique tel que trichloréthylène, trichloréthane, méthyléthylcétone ou alcool éthylique.

3°) Mise en forme de la céramique crue.

On réalise ensuite des feuilles de céramique crue par coulage de cette barbotine, puis séchage des feuilles pour permettre l'évaporation du solvant et découpe aux dimensions voulues.

II. FABRICATION DU COMPOSANT AVEC FRITTAGE EN ATMOSPHERE REDUCTRICE OU NEUTRE.

Une fois les feuilles de céramique crue préparées, on sérigraphie à leur surface les motifs internes respectifs au moyen d'une première encre de métallisation formée d'un pigment métallique, d'un véhicule organique (par exemple l'éthylcellulose dans une proportion de 5

à 10%) et d'un solvant (par exemple le terpinéol).

Le pigment métallique est par exemple choisi dans le groupe comprenant le cuivre, les alliages cuivre-nickel, cuivre-argent ou cuivre-aluminium, le cuivre enrobé d'argent ou de nickel (tous ces pigments contenant au moins 80% de cuivre), ainsi que l'or.

Après séchage de l'encre, on empile les différentes feuilles pourvues de leurs motifs sérigraphiés respectifs.

On comprime ensuite l'empilement en un bloc homogène, par exemple au moyen d'un système poinçon-matrice.

On procède ensuite à l'élimination des matieres organiques résiduelles puis à un frittage de la ceramique en atmosphère contrôlée, réductrice.

La température de frittage est de l'ordre de 950°C à 1000°C , de préférence environ 980°C.

L'atmosphère réductrice (ou neutre) est constituée par un gaz du groupe comprenant l'hydrogène pur, l'hydrogène humide, un mélange azote-hydrogène, l'azote, l'argon et l' hélium.

Après frittage, on procède à une finition des terminaisons par dépôt d'un métal.

Dans une première variante, le métal des terminaisons est choisi dans le groupe comprenant l'argent, le palladium, les alliages argent-palladium, le cuivre et les alliages cuivre-nickel ou cuivre-aluminium, ce dépôt étant réalisé par trempage dans une encre contenant le pigment métallique additionné d'une pâte de verre ou d'une pâte de céramique frittable à basse température, l'encre ainsi déposée étant cuite en atmosphère réductrice (la céramique ayant été frittée en atmosphère réductrice, il n'est pas possible de procéder à une recuisson en atmosphère oxydante).

La pâte de céramique frittable à basse température additionnée à l'encre peut être une céramique de type cordiérite frittable à basse température, de même type que celle ayant servi à la préparation du diélectrique. Dans ce cas, on peut réaliser une monocuisson, le métal des terminaisons étant alors déposé avant l'opération de frittage.

Le métal peut par ailleurs être introduit dans le pigment sous forme d'oxyde réductible à la cuisson, par exemple sous forme d'oxyde de cuivre $Cu_2O$ ; dans ce dernier cas, l'oxyde de cuivre peut être le constituant majoritaire de la pâte de verre.

Dans une seconde variante, le métal des terminaisons est choisi dans le groupe comprenant le nickel et les alliages cuivre-nickel, le dépôt étant réalisé par évaporation sous vide ou pulvérisation cathodique après masquage.

Dans l'une ou l'autre variante, il est possible de prévoir une recharge électrolytique ou chimique de la métallisation.

III. FABRICATION DU COMPOSANT AVEC FRITTAGE EN ATMOSPHERE OXYDANTE.

La succession des différentes étapes (sérigraphie, empilement, compression, frittage, finition) est la même que dans le cas du frittage en atmosphère réductrice ou neutre.

En ce qui concerne le choix du pigment métallique pour la réalisation des motifs conducteurs internes, celui-ci est choisi dans le groupe comprenant l'argent, les alliages argent-palladium riches en argent (de préférence à au moins 80% d'argent), et l'or.

Le frittage est réalisé à une température maximale de 980° C.

En ce qui concerne le métal des terminaisons, dans une première variante, celui-ci est choisi dans le

groupe comprenant l'argent, les alliages argent-palladium riches en argent (en général à au moins 75% d'argent) et l'or, le dépôt étant réalisé par trempage dans une encre contenant le pigment métallique additionné d'une pâte de verre ou d'une pâte de céramique frittable à basse température, l'encre ainsi déposée étant cuite en atmosphère oxydante ou réductrice.

Dans une seconde variante, le métal des terminaisons est choisi dans le groupe comprenant le nickel et les alliages cuivre-nickel, le dépôt étant réalisé par évaporation sous vide ou pulvérisation cathodique après masquage.

Comme précédemment, dans l'un ou l'autre cas, le métal déposé peut être éventuellement rechargé par un dépôt électrolytique ou chimique complémentaire.

## REVENDICATIONS

1. Procédé de fabrication d'un composant capacitif céramique multicouche comportant, dans un bloc céramique diélectrique fritté, des motifs internes conducteurs pré-établis ayant des surfaces en regard pour former des électrodes de condensateur, ces électrodes étant réunies et reliées à des terminaisons de prise de connexion formées sur des faces du composant, caractérisé par les étapes suivantes :

a) préparation d'une barbotine par mélange d'une poudre céramique de type cordiérite frittable à basse température avec un liant organique, en présence d'un solvant;

b) coulage de feuilles de céramique crue à partir de cette barbotine ;

c) séchage des feuilles pour évaporation du solvant ;

d) sérigraphie des motifs internes au moyen d'une première encre de métallisation formée d'un pigment métallique, d'un véhicule organique et d'un solvant ;

e) séchage de l'encre ;

f) empilement des différentes feuilles pourvues de leurs motifs sérigraphiés respectifs ;

g) compression de l'empilement en un bloc homogène ;

h) élimination des matières organiques résiduelles ;

i) frittage de la céramique, ce frittage étant réalisé à une température maximale inférieure à 1 000°C ;

j) finition des terminaisons par dépôt d'un métal.

2. Procédé selon la revendication 1, caractérisé en ce que le frittage est réalisé sous atmosphère réductrice ou neutre.

3. Procédé selon la revendication 2, caractérisé en ce que l'atmosphère réductrice ou neutre est constituée par un gaz du groupe comprenant l'hydrogène pur, l'hydrogène humide, un mélange azote-hydrogène, l'azote, l'argon et l'hélium.

4. Procédé selon la revendication 2, caractérisé par le fait que le pigment métallique de la première encre de métallisation est choisi dans le groupe comprenant le cuivre, les alliages cuivre-nickel, cuivre-argent ou cuivre-aluminium, le cuivre enrobé d'argent ou de nickel, tous ces pigments contenant au moins 80 % de cuivre, ainsi que l'or.

5. Procédé selon la revendication 2, caractérisé en ce que le métal des terminaisons est choisi dans le groupe comprenant l'argent, le palladium, les alliages argent-palladium, le cuivre, et les alliages cuivre-nickel ou cuivre-aluminium, ce dépôt étant réalisé par trempage dans une encre contenant le pigment métallique additionné d'une pâte de verre ou d'une pâte de céramique frittable à basse température, l'encre ainsi déposée étant cuite en atmosphère réductrice.

6. Procédé selon la revendication 5, caractérisé par le fait que le métal est introduit dans le pigment sous forme d'oxyde réductible à la cuisson.

7. Procédé selon la revendication 2, caractérisé en ce que le métal des terminaisons est choisi dans le groupe comprenant le nickel et les alliages cuivre-nickel, le dépôt étant réalisé par évaporation sous vide ou pulvérisation cathodique après masquage.

8. Procédé selon la revendication 1, caractérisé en ce que le frittage est réalisé sous atmosphère oxydante.

9. Procédé selon la revendication 8, caractérisé en ce que le pigment métallique de la première encre de métallisation est choisi dans le groupe comprenant l'argent, les alliages argent-palladium et l'or.

10. Procédé selon la revendication 8, caractérisé en ce que le métal des terminaisons est choisi dans le groupe comprenant l'argent, les alliages argent-palladium et l'or, le dépôt étant réalisé par trempage dans une encre contenant le pigment métallique additionné d'une pâte de verre ou d'une pâte de céramique frittable à basse température, l'encre ainsi déposée étant cuite en atmosphère oxydante ou réductrice.

11. Procédé selon la revendication 8, caractérisé par le fait que le métal des terminaisons est choisi dans le groupe comprenant le nickel et les alliages cuivre-nickel, le dépôt étant réalisé par évaporation sous vide ou pulvérisation cathodique après masquage.

12. Composant capacitif céramique multicouche obtenu par la mise en oeuvre du procédé selon l'une des revendications précédentes.

Office européen des brevets

**0213989**

# RAPPORT DE RECHERCHE EUROPEENNE

Numéro de la demande

EP 86 40 1569

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | DE-C- 767 744 (PORZELLANFABRIK KAHLA)<br>* En entier *<br>--- | 1,12 | H 01 G 4/12<br>H 01 G 4/30 |
| A | DE-A-1 464 417 (AEROVOX CORP.)<br>* Page 11, alinéa 3 - page 16, alinéa 3 *<br>--- | 1,12 | |
| A | US-A-4 451 869 (MURATA MANUFACTURING)<br>* Colonne 3, ligne 44 - colonne 6, ligne 12 *<br>--- | 2,3,5,12 | |
| A | US-A-4 101 952 (SPRAGUE ELECTRIC CO.)<br>* Exemple 1 *<br>--- | 4 | |
| A | GB-A-2 106 714 (AVX CORP.)<br>* Page 1, ligne 64 - page 2, ligne 2; page 2, lignes 36-38 *<br>--- | 7,11 | **DOMAINES TECHNIQUES RECHERCHES (Int Cl 4)**<br>H 01 G |
| A | EP-A-0 125 831 (SPRAGUE ELECTRIC CO.)<br>* Résumé *<br>--- -/- | | |

Le présent rapport de recherche a été établi pour toutes les revendications

| Lieu de la recherche | Date d'achèvement de la recherche | Examinateur |
|---|---|---|
| LA HAYE | 01-12-1986 | SCHUERMANS N.F.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen des brevets

0213989

**RAPPORT DE RECHERCHE EUROPEENNE**

Numéro de la demande

EP 86 40 1569

Page 2

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.4) |
| A | CHEMICAL ABSTRACTS, vol. 102, no. 14, avril 1985, page 311, Résumé no. 118404n, Columbus, Ohio, US; & JP-A-59 203 767 (TOYOTA CENTRAL RESEARCH AND DEVELOPMENT LABORATORIES INC.) 17-11-1984 * En entier * ----- | 1,12 | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 01-12-1986 | SCHUERMANS N.F.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82